(19) Europäisches Patentamt / European Patent Office / Office européen des brevets

(11) **EP 4 525 506 A1**

(12) **EUROPEAN PATENT APPLICATION**

(43) Date of publication:
19.03.2025 Bulletin 2025/12

(21) Application number: 24196023.6

(22) Date of filing: 22.08.2024

(51) International Patent Classification (IPC):
*H04W 24/02* (2009.01)    *H04L 41/0803* (2022.01)

(52) Cooperative Patent Classification (CPC):
**H04W 24/02; H04L 41/0803;** H04L 41/40;
H04W 88/085; H04W 88/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 18.09.2023 US 202363583527 P
06.06.2024 US 202418736489

(71) Applicant: FUJITSU LIMITED
Kawasaki-shi, Kanagawa 211-8588 (JP)

(72) Inventors:
• ASHRAFI, Solyman
Richardson, 75082 (US)
• MORISHIMA, Hisayuki
Kawasaki-shi, 211-8588 (JP)
• SEKINO, Toru
Richardson, 75082 (US)
• ADEYEMI, Olufemi
Richardson, 75082 (US)

(74) Representative: Haseltine Lake Kempner LLP
Cheapside House
138 Cheapside
London EC2V 6BJ (GB)

(54) **RADIO ACCESS NETWORK ADJUSTMENT**

(57)    A method may include a near-real-time radio access network intelligent controller receiving, from a distributed unit of a radio access network, current values of network parameters of the radio access network, the radio access network established using at least one radio access network device. The method may include the near-real-time radio access network intelligent controller obtaining adjustments to one or more of the current values of the network parameters. The method may also include directing the adjustments to the distributed unit for implementation in near-real-time in the radio access network.

FIG. 3

EP 4 525 506 A1

## Description

### FIELD

The present disclosure generally relates to radio access network adjustment.

### BACKGROUND

A radio access network (RAN) may be employed to help to provide secure, reliable, better-performance wireless communication. For example, a RAN may facilitate the transmission of data between user equipment devices and a core network. Alternately or additionally, a RAN may be deployed in multiple different situations to help provide wireless communication. For example, a RAN may connect a mobile phone to a mobile network over radio waves. As another example, a RAN may provide a connection to access web-based applications.

The subject matter claimed in the present disclosure is not limited to embodiments that solve any disadvantages or that operate only in environments such as those described above. Rather, this background is only provided to illustrate example technology areas where some embodiments described in the present disclosure may be practiced.

### SUMMARY

According to an aspect of an embodiment, a method may include a near-real-time radio access network intelligent controller (near-RT RIC) receiving from a distributed (DU) of a radio access network (RAN) current values of network parameters of the RAN. The near-RT RIC may obtain adjustments to one or more of the current values of the network parameters of the RAN. The near-RT RIC may direct the adjustments to the DU of the RAN for implementation in near-real-time in the RAN.

The objects and advantages of the embodiments will be realized and achieved at least by the elements, features, and combinations particularly pointed out in the claims. It is to be understood that both the foregoing general description and the following detailed description are explanatory and are not restrictive of the invention, as claimed.

### BRIEF DESCRIPTION OF THE DRAWINGS

Example embodiments will be described and explained with additional specificity and detail through the use of the accompanying drawings in which:

FIG. 1 illustrates an example environment for adjustment of a Radio Access Network (RAN);
FIG. 2A illustrates an example process flow to generate RAN adjustments;
FIG. 2B illustrates an example multi-dimensional calculation of desired network performance for generating RAN adjustments;
FIG. 3 illustrates a flowchart of an example method of adjusting a RAN; and
FIG. 4 is an example computing system, all in accordance with one or more embodiments of the present disclosure.

### DETAILED DESCRIPTION

A radio access network (RAN) may be employed to help provide wireless communication for devices. In some circumstances, RANs may be deployed to use radio frequencies that are different than radio frequencies that are used by many other types of wireless equipment, such as 802.11 devices. Because RANs may utilize unique radio frequencies that may not interfere with other wireless equipment, RANs may facilitate the transmission of data between user equipment devices and a core network with less noise than other types of wireless networks. Consequently, RANs may be used for wireless communication in various technology fields such as those involving emergency response systems, Internet of Things (IoT), manufacturing, logistics, healthcare, personal networks, and transportation. For example, a RAN may be used in manufacturing to support machine-to-machine communication, monitoring of production systems, and/or for other applications.

A RAN may have many network parameters that may impact how end-user devices (e.g., user equipment (UE)) connect with and/or operate using the RAN. For example, a RAN may include network parameters that may indicate traffic volume, throughput, latency, signal strength, interference, quality of service, etc. Such network parameters may be adjusted to improve overall performance of the RAN. In response to the current values of the network parameters not being adjusted for improved performance, end-user devices may experience undesired results such as disconnecting from the network (e.g., a dropped phone call), buffering, battery drain, etc. As end-user devices increase in popularity causing network traffic in RANs to increase, changes to the current values of network parameters of RANs may occur with greater frequency. An automated process for measuring such changes efficiently and generating a set of corresponding adjustments to implement to improve overall performance of the RAN may be helpful in ensuring end-user devices connect with and operate using the RAN as desired.

Calculating adjustments of network parameters in non-real-time to get improved network performance may be prone to error because of the large number of RAN devices and/or end-user devices that may be included. For example, a RAN may include two, five, ten, fifty, one hundred, a thousand, or thousands of RAN devices and even more end-user devices. As RANs are increasingly employed by non-experts and include more RAN devices, end-user devices, network elements, and sophisticated protocols, automated network parameter adjusting may be increasingly helpful.

The present disclosure may relate to, among other things, a method and system to adjust the network parameters of a RAN using a near-real-time radio access network intelligent controller (near-RT RIC). Thus, the network parameter adjusting process of the RAN may be improved by creating a method and system of automating RAN adjustments according to the present disclosure. Automatically adjusting network parameters in a RAN based on current values of network parameters may assist in ensuring that a RAN is operating at a desired network performance level.

Embodiments of the present disclosure are explained with reference to the accompanying figures.

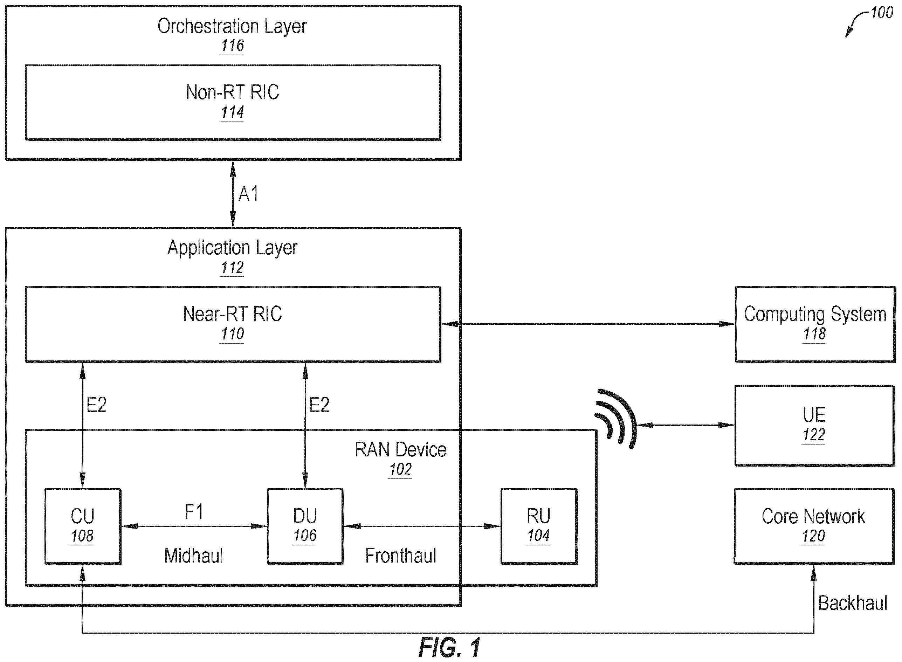

Turning to the figures, FIG. 1 illustrates an example operating environment 100 for adjusting network parameters of a RAN according to one or more embodiments of the present disclosure. The environment 100 may include the RAN device 102, which may include a radio unit 104 (RU 104), a distributed unit 106 (DU 106), and/or a central unit 108 (CU 108); a near-RT RIC 110; a non-real-time radio access network intelligent controller 114 (non-RT RIC 114); a computing system 118; a core network 120; and/or user equipment 122 (UE 122).

In some embodiments, the RAN device 102 may include any of various devices in which radio broadcast operations may be carried out. For example, the RAN device 102 may be any device that includes hardware and/or software to create a RAN using radio frequency signals. For example, the RAN device 102 may include one or more antennas, transceivers, radio frequency circuitry, and other hardware/software configured to implement one or more protocols to implement a RAN. As an example, the RAN device 102 may include a base transceiver station (BTS), small cell, distributed antenna system (DAS), baseband unit (BBU), or components thereof. In some embodiments, the RAN device 102 may include one or more virtualized components. For example, as illustrated in FIG. 1, the RAN device 102 may include a physical RU 104 (e.g., a remote radio head (RRH)) and both a software-based DU 106 and a CU 108 that exist on an application layer 112 of a virtualized RAN (VRAN). In some embodiments, the RU 104 may be located near or be integrated into a radio antenna and may be configured to transmit, receive, and/or amplify radio frequency signals. In some embodiments, the RU 104 may communicate with the DU 106 via a fronthaul interface. In these and other embodiments, the fronthaul interface may include any type of network, such as an optical or a wireless network, configured to enable interoperability and/or virtualization between the RU 104 and the DU 106. In some embodiments, the fronthaul interface may utilize artificial intelligence (AI).

In some embodiments, the RAN device 102 may be configured to establish a RAN. In these and other embodiments, establishing a RAN may include the RAN device 102 being configured to wirelessly interface with other devices and connect the devices to one or more other networks, such as public or private networks. In these and other embodiments, the RAN may have one or more characteristics that may vary based on the location of the RAN, type of the RAN, types, locations, and number of devices to connect to the RAN, networks to connect to the RAN, and frequencies to be used by the RAN, among other factors.

In some embodiments, the DU 106 may be configured to run lower layers of the RAN's protocol stack including the upper physical layer, the radio link control layer, and/or the medium access control layer. In these and other embodiments, the DU 106 may be virtualized to run on a cloud-server. Alternately or additionally, the DU 106 may be located at or relatively near a base station to reduce latency. In some embodiments, the DU 106 and the CU 108 may be communicatively coupled via a network interface (e.g., the F1 interface, or midhaul interface, as illustrated in FIG. 1). In these and other embodiments, the DU 106 may be controlled by the CU 108. For example, the CU 108 may enforce network policies such as quality of service (QoS) policies governing the behavior of the DU 106. In some embodiments, the CU 108 may be configured to run higher layers of the RAN's protocol stack including the radio resource control (RRC) layer such that the CU 108 may be configured to adjust parameters of the DU 106 related to transmission power, modulation and coding scheme, handover, load balancing, etc. In these and other embodiments, the CU 108 may control the DU 106 as part of coordinating operations performed by multiple DUs. For example, the CU 108 may coordinate two DUs, ten DUs, 50 DUs, 100 DUs, or more. In these and other embodiments, the CU 108 may be located at or relatively near a base station or may be located at a central aggregation site for multiple DUs. In some embodiments, the DU 106 and/or the CU 108 may operate as part of a network functions virtualization infrastructure platform. For example, the CU 108 may be virtualized to run on a cloud-server.

In some embodiments, the RAN established by the RAN device 102 may include network parameters. In some embodiments, the network parameters may represent one or more measurements of the RAN's performance (e.g., percentage of a geographic area covered by the RAN, signal-to-noise ratio, handover success rate, etc.). Alternately or additionally, the network parameters may represent one or more settings or characteristics of the RAN device 102 and/or one of the components of the RAN device 102 that may impact the performance of the RAN (e.g., radio frequency band settings, security settings, resource allocation settings, modulation and coding scheme settings, etc.). For instance, the network parameters may include uplink power control, uplink scheduling, uplink resource allocation, uplink interference mitigation, uplink quality of experience, uplink performance spectral efficiency, energy consumption, processing efficiency, and/or any other parameter related to the overall performance of the RAN. In some embodiments, the network parameters may be grouped based on a known relationship between certain network parameters (e.g., improved interference mitigation is known to increase energy consumption) and/or based on user preference. For example, the network parameters may be grouped according to one or more key performance indicators (KPIs) established by a user (e.g., a RAN provider) and/or by the RAN industry including accessibility, retainability, mobility, integrity, availability, utilization, traffic, etc. For instance, handover success rate (HOSR) and circuit switch fallback (CSFB) may be network parameters that may be grouped as part of the mobility KPI. In some embodiments, grouping the network parameters according to one or more KPIs may improve the speed at which the near-RT RIC 110 may obtain adjustments to the network parameters, the speed at which the near-RT RIC 110 may direct the adjustments to the DU 106, and/or the implementation of the adjustments in the RAN.

In some embodiments, the near-RT RIC 110 may be a virtualized (e.g., software) component of the RAN configured to perform resource management operations of the RAN. The near-RT RIC 110 may be configured to perform the resource management operations in near-real-time. In near-real-time may include operations to be performed in less than 1 second. For example, the near-RT RIC 110 may perform resource management operations in 10 milliseconds, 100 milliseconds, 500 milliseconds, 900 milliseconds, etc., up to 1 second. In some embodiments, operations performed by the near-RT RIC 110 may be executed using an application (e.g., an eXtended application or xApp). In these and other embodiments, the near-RT RIC 110 may interact with the RAN device 102. For example, the near-RT RIC 110 may interact with the RAN device 102 by receiving data from and sending instructions and/or data to one or more components of the RAN device 102. For example, in some embodiments, the near-RT RIC 110 may obtain current values of one or more network parameters from the RAN device 102. In some embodiments, the current values may be the measurements and/or determinations of the network parameters for a given timeframe (e.g., since the last time measurements were taken). In some embodiments, the near-RT RIC 110 may obtain the current values of one or more network parameters via the DU 106 of the RAN device 102. Alternately or additionally, the near-RT RIC 110 may obtain adjustments for one or more network parameters of the RAN based on the current values of the network parameters. In these and other embodiments, the adjustments may be configured to improve one or more KPI's of the RAN. Alternately or additionally, the adjustments may be configured to improve an overall network performance of the RAN. In some embodiments, the near-RT RIC 110 may obtain the adjustments by determining the adjustments using the current values of the network parameters. Alternately or additionally, the near-RT RIC 110 may provide the current values of the network parameters to the computing system 118. The computing system 118 may generate the adjustments and provide the adjustments to the near-RT RIC 110.

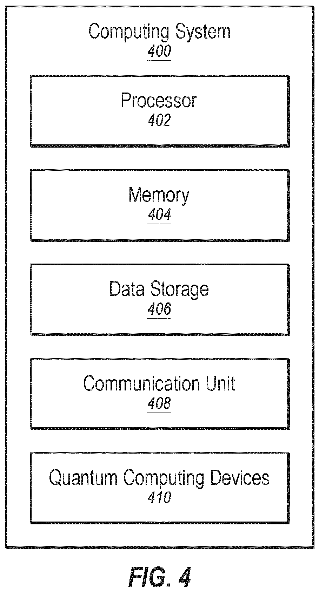

In some embodiments, the computing system 118 may include one or multiple computing systems, such as multiple servers that each include memory and at least one processor. Alternately or additionally, the computing system 118 may be a system configured to perform one or more of quantum annealing or simulated annealing (e.g., a quantum computer, a digital annealer, a noisy intermediate-scale quantum (NISQ) device, etc.) such as the computing system 400 described with respect to FIG. 4. In some embodiments, the computing system 118 may be configured to generate (e.g., calculate) adjustments of the network parameters by solving one or more optimization problems and/or performing one or more integer factorizations, simulations, and/or data analyses. For instance, the computing system 118 may be configured to solve a multi-factor optimization problem by using quantum annealing and/or simulated annealing techniques to determine a global maximum of a utility function based on the current values of the network parameters received by the computing system 118. In these and other embodiments, the near-RT RIC 110 may be communicatively coupled to the computing system 118 to obtain the adjustments generated by the computing system 118 from the computing system 118. Alternately or additionally, the near-RT RIC 110 may obtain the adjustments via one or more brute-force techniques. The computing system 118 may use one or more artificial intelligence (AI) models such as a machine learning (ML) model to generate the adjustments.

In some embodiments, the environment 100 may include a non-RT RIC 114 configured to operate on an orchestration layer 116. In some embodiments, the orchestration layer 116 may include a management and network orchestration (MANO) framework and/or an open network automation platform (ONAP) such that the non-RT RIC 114 may perform network management resource operations that take greater than 1 second to perform. For example, the non-RT RIC 114 may manage RAN configuration, architecture, and/or infrastructure by facilitating communication between the orchestration layer 116 and the application layer 112 using a network interface (e.g., the A1 interface as illustrated in FIG. 1). In some embodiments, the non-RT RIC 114 may use the A1 interface to communicate with the near-RT RIC 110 on the application layer 112. In these and other embodiments, the non-RT RIC 114 and the near-RT RIC 110 each operating on the orchestration layer 116 and on the application layer 112 respectively, may improve RAN adjustment by balancing the quick implementation of adjustments in near-real-time (e.g., under 1 second) using the near-RT RIC 110 with the policy-based guidance and management (e.g., model management, configuration management, device management, fault management, performance management, lifecycle management, etc.) provided by the non-RT RIC 114. In some embodiments, the non-RT RIC 114 may use data analytics and/or artificial intelligence (AI) to provide recommendations of RAN adjustments to applications (e.g., xApps) running on the near-RT RIC 110, which in turn may provide feedback to the non-RT RIC 114.

In some embodiments, the core network 120 may be any network or configuration of networks configured to send and receive communications between systems and devices. In some embodiments, the core network 120 may include a wired network, an optical network, and/or a wireless network, and may have numerous different configurations, including multiple different types of networks, network connections, and/or network protocols to communicatively couple devices and systems in the environment 100. In some embodiments, the RAN device 102 may connect to the core network 120 via the CU 108. In these and other embodiments, the CU 108 may communicate with the core network 120 via a backhaul interface. The backhaul interface may include any type of network, such as an optical or a wireless network, configured to connect the core network 120 with one or more subnetworks operated by the CU 108. For example, the CU 108 of the RAN device 102 may connect to the core network 120 using the backhaul interface to exchange data between the UE 122 and the Internet, update firmware, receive provisioning-related data, communicate with a spectrum access system (SAS), etc.

In some embodiments, the UE 122 may be any electronic device that is configured for wireless communication. For example, the UE 122 may be a mobile phone, smart phone, laptop, computer, desktop computer, vehicle, and/or any other device configured to communicate with the RAN via the RU 104. In some embodiments, the UE 122 may use the RAN to perform a user task (e.g., make a phone call, stream a video, perform a search on the Internet, etc.) by remotely connecting to the core network 120 via the RAN device 102. For example, the UE 122 may transmit radio signals to the RU 104 to be digitized that the radio signals may be sent between the RU 104 and the DU 106, between the DU 106 and the CU 108, and between the CU 108 and the core network 120 to establish a connection between the UE 122 and the core network 120.

As an example of operation, the RAN device 102 may be configured to establish a RAN in the environment 100. The RAN device 102 may include one or more RUs 104 configured to transmit and/or receive radio signals to and/or from one or more UEs 122. Based on demand from the UEs 122, network parameters of the RAN established by the RAN device 102 may change. For instance, many simultaneous mobile phone users (e.g., at a parade, a sporting event, a concert, etc.) may impact network parameters of the RAN such as by reducing interference mitigation, increasing download/upload times, etc. The DU 106 may be configured to determine current values of the network parameters. For example, the DU 106 may be communicatively coupled to the one or more RUs 104 such that the DU 106 may aggregate data of network parameters to determine current values of the network parameters that are representative of the overall network performance of the RAN. The DU 106 may be configured to send the current values of the network parameters to the near-RT RIC 110 such as through a network interface (e.g., the E2 interface as illustrated in FIG. 1). In response to receiving the current values of the network parameters, the near-RT RIC 110 may be configured to obtain adjustments to the current values (e.g., from the computing system 118). In response to obtaining the adjustments, the near-RT RIC 110 may direct the adjustments to the DU 106 for implementation in near-real-time in the RAN. For instance, the DU 106 may direct the RUs 104 and/or other components of the RAN device 102 to adjust one or more settings (e.g., adjust the radio frequencies the RUs 104 are transmitting to/receiving from, adjust the modulation and coding schemes, etc.) and/or to execute one or more operations (e.g., use a packet scheduling algorithm to prioritize the transmission of data packets from priority UE 122, direct UEs 122 to connect to RUs 104 with low traffic loads, etc.). In some embodiments, implementation in near-real-time of the adjustments to the current values of the network parameters may improve the RAN by maximizing the capacity (e.g., increase throughput), minimize failures (e.g., decrease network outages), and/or minimize delays (e.g., decrease connection latency). For instance, based on the adjustments being directed from the near-RT RIC 110, the DU 106 may cause the RUs 104 to execute operations to reduce network speeds for UE devices classified as non-priority (e.g., mobile phones of community parade viewers) only as much as needed to maintain desired network speeds for UE devices classified as priority (e.g., mobile phones used by first responders as part of their job duties).

Modifications, additions, or omissions may be made to the environment 100 without departing from the scope of the disclosure. For example, the designations of different elements in the manner described is meant to help explain concepts described herein and is not limiting. For instance, in some embodiments, the RAN device 102 is delineated in the specific manner described to help with explaining concepts described herein, but such delineation is not meant to be limiting. Further, the environment 100 may include any number of other elements or may be implemented within other systems or contexts than those described.

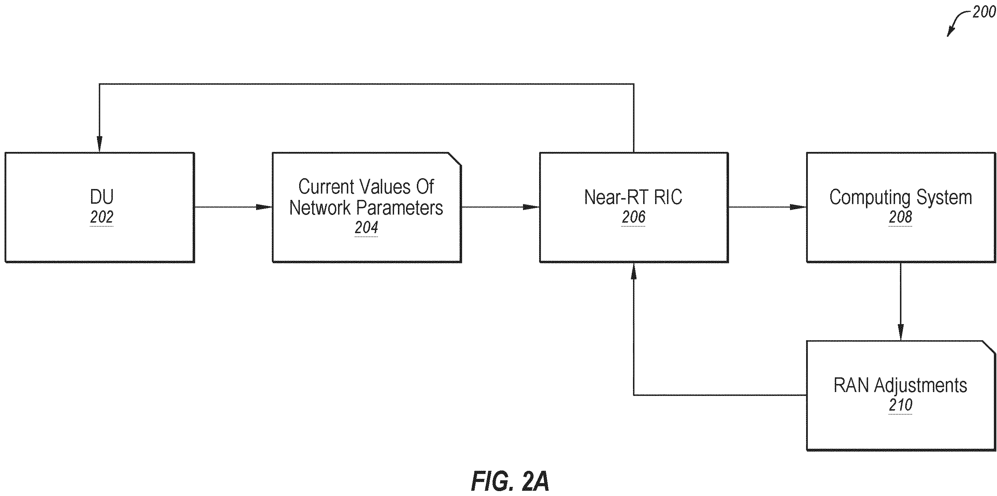

FIG. 2A illustrates an example process flow 200 of generating RAN adjustments 210 using current values of network parameters 204, in accordance with one or more embodiments of the present disclosure. In some embodiments, the process flow 200 may use a distributed unit 202 (DU 202), a near-real-time radio access network intelligent controller 206 (near-RT RIC 206), and a computing system 208. Alternately or additionally, in some embodiments, the process flow 200 may describe one or more elements and/or systems illustrated with respect to FIG. 1 and described above. For example, the DU 202 may be analogous or similar to the DU 106, the near-RT RIC 206 may be analogous or similar to the near-RT RIC 110, and/or the computing system 208 may be analogous or similar to the computing system 118.

In some embodiments, the DU 202 may be configured to collect current values of one or more network parameters 204. For example, the DU 202 may collect radio signal conditions (e.g., signal strength, signal-to-noise ratio (SNR), interference levels, etc.) from RUs, quality of service (QoS) data from UE devices (e.g., data rates, latency, packet loss, jitter, etc.), and/or may collect any other current values of network parameters 204, such as the current values of network parameters 204 related to the DU 202 running one or more lower layers of the RAN's protocol stack. In some embodiments, metadata and/or any other characteristic of the current values of network parameters 204 may be used by the DU 202 to collect the current values of network parameters 204. In some embodiments, the DU 202 may be configured to collect the current values of network parameters 204 in near-real-time (e.g., in less than 1 second).

In some embodiments, the current values of network parameters 204 may represent the performance of the RAN. In some embodiments, the current values of network parameters 204 may represent the RAN's performance at a specific moment or for a given timeframe. For example, current values may refer to the network parameters as last collected by the DU 202 and/or by another component of the RAN. Alternately or additionally, the current values of network parameters 204 may include one or more combinations of network parameters (e.g., average or combination of multiple measurements of the same network parameter made over time, average or combination of multiple measurements of the same network parameter made by different components of the RAN, average or combination of multiple measurements of multiple related network parameters, etc.). The current values of network parameters 204 may be in any data format (e.g., numerical, categorical, text-based, etc.). For example, one or more of the current values of network parameters 204 may be collected as a percentage (e.g., "32" may represent that 32% percent of RUs are available), a number (e.g., "17" may represent that 17 RUs are available), and/or as a text-based response (e.g., "YES" may represent that at least one RU is available).

In some embodiments, the DU 202 may be communicatively coupled to the near-RT RIC 206 such that the DU 202 may send the current values of network parameters 204 to the near-RT RIC 206 (e.g., via the E2 network interface). For example, the DU 202 may be configured to communicate with one or more applications, such as an eXtended application (xApp), running on the near-RT RIC 206. In some embodiments, the applications may be software applications used by the near-RT RIC 206 to implement specific functions in near-real-time within the RAN architecture. For example, the applications may enable the near-RT RIC 206 to implement functions related to radio resource management (RRM), mobility management, security, etc. In these and other embodiments, the near-RT RIC 206 may provide the applications with cloud-based infrastructure for controlling a distributed collection of the RAN's infrastructure via an E2 network interface. In some embodiments, in response to receiving the current values of network parameters 204, the near-RT RIC 206 may send the computing system 208 the current values of network parameters 204 such that the computing system 208 may generate RAN adjustments 210.

In some embodiments, the computing system 208 may be configured to generate the RAN adjustments 210 using the current values of network parameters 204. The RAN adjustments 210 may be configured to increase performance of the RAN. For example, the RAN adjustments 210 may be configured to improve one or more KPIs of the RAN. Alternately or additionally, the RAN adjustments may be configured to improve the overall performance of the RAN. In some embodiments, the overall performance of the RAN may be determined based on one or more factors, such as uplink performance spectral efficiency, receiver sensitivity, energy consumption, and total cost of ownership of the RAN. In these and other embodiments, the RAN adjustments may be configured to enhance or balance all the factors. In these and other embodiments, the RAN adjustments may be configured to provide a solution that balances the factors to achieve desired network performance. Note that balancing the factors may results in some factors not achieving a maximum possible result based on a relationship between the factors that may cause one factor to decrease based on an increase of another factor and vice versa. In these and other embodiments, balancing the factors may involve a multi-dimensional calculation.

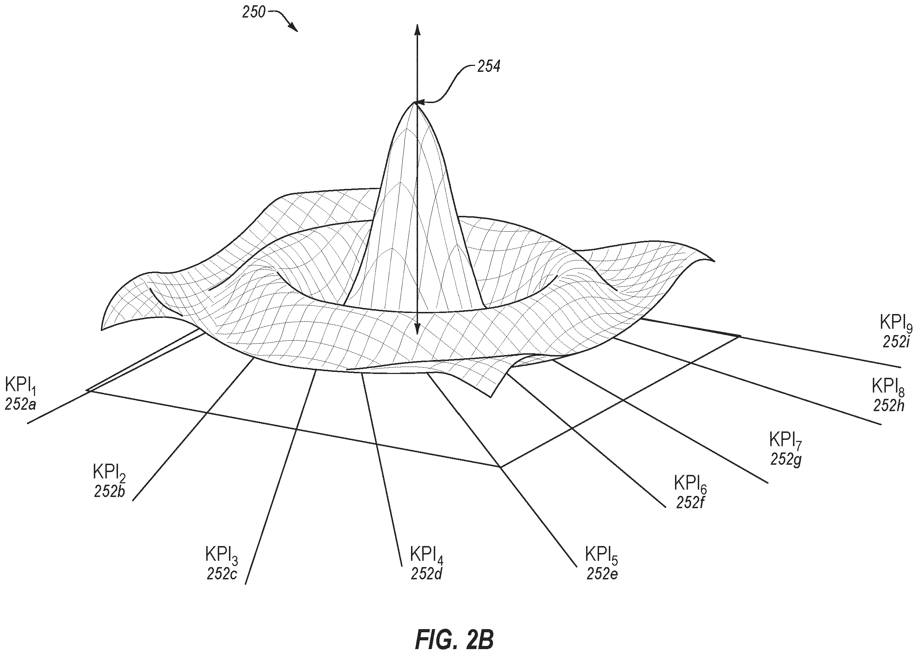

For instance, FIG. 2B illustrates an example multi-dimensional calculation 250 of desired network performance 254 using KPIs 252a-252i. In some embodiments, the multi-dimensional calculation 250 may include solving for or estimating one or more solutions to an optimization problem. In these and other embodiments, the desired network performance 254 may represent the performance of the RAN that satisfies a performance threshold. In these and other embodiments, the performance threshold may be an optimized or maximized performance of the RAN or some percentage of the overall optimized or maximized performance of the RAN. In these and other embodiments, the performance threshold may satisfy one or more conditions selected by a user, owner, operator, manager, etc. of the RAN.

As illustrated in FIG. 2B, the desired network performance 254 may be calculated based on groupings of network parameters into KPIs 252a-252i. For example, each of the KPIs 252a-252i may be represented in the multi-dimensional calculation 250 as existing in its own plane (e.g., dimension) such that the multi-dimensional calculation 250 may represent (e.g., via a graphical representation) the relationships between the KPIs 252a-252i. In some embodiments, representing the relationships between the KPIs 252a-252i may represent one or more relationships of the network parameters that are included in the KPIs 252a-252i. In some embodiments, RAN adjustments may be generated based on the desired network performance 254 determined by the multi-dimensional calculation 250 using the KPIs 252a-252i. For example, a computing system may be used to determine (e.g., solve or estimate) how adjusting certain network parameters may impact the KPIs 252a-252i and/or the wireless network performance of the RAN overall.

In some embodiments, the desired network performance 254 may indicate an overall performance of the RAN that satisfies an overall network threshold even when one or more or all of the KPIs 252a-252i may not be configured to satisfy a desired individual KPI threshold. In some embodiments, a same network parameter may be included in multiple KPIs 252a-252i. For example, energy consumption is a network parameter that may be accounted for in an accessibility KPI as well as in an integrity KPI. Accordingly, in some embodiments, adjusting one network parameter may adjust multiple KPIs and may impact the overall performance of the RAN.

Returning to FIG. 2A, in some embodiments, the computing system 208 may be configured to solve or estimate one or more solutions to the multi-dimensional calculation given factors (e.g., KPIs or individual network parameters) to enhance or balance. In these and other embodiments, the computing system 208 may generate the RAN adjustments 210 using quantum annealing and/or simulated annealing. For instance, solving or estimating the solution to a multi-factor optimization problem using quantum annealing and/or simulated annealing may include the computing system 208 mapping a combinatorial optimization problem to an Ising model to identify a ground state (e.g., where the energy of the Ising model system is the lowest) based on the Markov-Chain Monte Carlo (MCMC) method. In some embodiments, the computing system 208 may be configured to apply stochastic transitions to classical bits corresponding to binary values. In some embodiments, solving a multi-factor optimization problem to generate the RAN adjustments 210 may include the computing system 208 converting a concave (e.g., non-polynomial hard) optimization problem into a convex optimization problem and/or adjusting a concave optimization problem to mimic a convex optimization problem. For example, the computing system 208 may convert the concave optimization problem into an eigen value-eigen vector problem that may be solved to identify a global maximum.

As an example of operation, the computing system 208 may be configured to estimate the solution to a multi-factor optimization problem by maximizing a utility function (e.g., Equation 1 below) such that RAN adjustments 210 may be generated based on the current values of network parameters 204 as grouped by key

performance indicators (KPIs).

$$\rho(Network) = \sum_{i=1}^{N} \varepsilon_i \, KPI_i \qquad \text{(Equation 1)}$$

In some embodiments, $N$ may represent a number of user equipments (UEs) with a specified signal-to-interference-plus-noise ratio (SINR). In some embodiments, $KPI$ may be expressed in units of bit/s/Hz/m². In some embodiments, $\varepsilon$ may represent an exploration-exploitation trade-off value (e.g., as in an epsilon-greedy algorithm) that may be selected based on how much change in the RAN adjustments 210 may be desired as compared to known adjustments. For example, $\varepsilon$ may be a value between 0 and 1 such that when a random number generated between 0 and 1 is less than $\varepsilon$, the RAN adjustments 210 may be selected randomly, and when a random number generated between 0 and 1 is more than $\varepsilon$, the RAN adjustments 210 may be the best-known adjustments based on historical data, or vice versa. In some embodiments, Equation 1 may include the constraint: $\frac{SINR_i}{Handover\ Cost\ Function} \geq \alpha_i$. For example, the *Handover Cost Function* constraint may be expressed in units of J/FLOPS, where J represents energy in Joules and FLOPS represents floating-point operations per second being performed between two components of the radio access network (e.g., between the DU 202 and the near-RT RIC 206). In some embodiments, the constraint may adjust how and/or when Equation 1 may be used in generating the RAN adjustments 210 based on the radio access network having energy to perform handover based on satisfying a threshold (e.g., being greater than or equal to $\alpha_i$).

In some embodiments, the RAN adjustments 210 may be generated by the computing system 208 estimating the solution to a multi-factor optimization problem by increasing or maximizing a network evaluation measurement. For example, the computing system 208 may calculate one or more network parameter values that may result in an increased or maximized network evaluation measurement that represents uplink performance spectral efficiency, receiver sensitivity, energy consumption, and total cost of ownership (TCO) that is expressed in units of bit/s/Hz/m²/J/FLOPS/$. In some embodiments, bit may be a measurement of units of the data transmitted by the RAN in binary digits, s may be a measurement of the time the RAN takes to transmit the data in seconds, Hz may be a measurement of frequency used by the RAN to transmit the data in hertz, m² may be a measurement of area served by the RAN in meters squared, J may a measurement of energy consumed by the RAN to transmit the data in joules, FLOPS may be a measurement of computing performance capability of the RAN to perform baseband processing in floating-point operations per second, and/or $ may be a measurement of cost of one or more of using the RAN and providing the RAN in a currency (e.g., U.S. Dollar, €, ¥, etc.). In some embodiments, the computing system 208 may send the near-RT RIC 206 the calculated network parameter values (e.g., the RAN adjustments 210) such that the near-RT RIC 206 may instruct the DU 202 and/or other components of the RAN to adjust the current values of network parameters 204 accordingly to improve overall performance of the RAN and achieve the increased or maximized network evaluation measurement.

In some embodiments, the computing system 208 may generate the RAN adjustments 210 using artificial intelligence (AI). For example, the computing system 208 may be configured to train and/or run interference on one or more machine learning (ML) models, deep neural networks (DNNs), convolutional neural networks (CNNs), large language models (LLMs), and/or any other AI models. For example, historical data of network parameters of the RAN may be used by the computing system 208 to train an AI model to generate improved RAN adjustments 210. In some embodiments, using AI to generate the RAN adjustments 210 may improve predictions of network degradation in the RAN.

In some embodiments, the near-RT RIC 206 may obtain the RAN adjustments 210 from the computing system 208. In some embodiments, generating the RAN adjustments 210 using the computing system 208 may improve the function of the near-RT RIC 206 and/or the overall performance of the RAN. For example, generating the RAN adjustments 210 using the computing system 208 may free up computational resources that the near-RT RIC 206 and/or other components of the RAN may then use to perform other operations (e.g., the near-RT RIC 206 may be faster at collecting the current values of network parameters 204 and/or at sending the RAN adjustments 210 to the DU 202 when not generating the RAN adjustments 210 itself).

In some embodiments, in response to receiving the RAN adjustments 210, the near-RT RIC 206 may send the RAN adjustments 210 to the DU 202 (e.g., using the E2 network interface). In some embodiments, the DU 202 may be configured to implement the RAN adjustments 210 in near-real-time in the RAN. For example, the DU 202 may be configured to adjust and/or direct another component of the RAN to adjust one or more RAN settings. In some embodiments, the RAN adjustments 210 may include instructions that may be interpretable by the near-RT RIC 206 and/or the DU 202 such that the DU 202 may adjust the network parameters and/or cause the network parameters to be adjusted accordingly. For example, the RAN adjustments 210 may indicate that overall performance of the RAN may be improved in response to the DU 202 instructing one or more RUs to adjust their load balance thresholds. Alternately or additionally, the RAN adjustments 210 may include one or more command prompts that when run on the DU 202 may automatically cause the current values of network parameters 204 to be adjusted. In some embodiments, implementation of the RAN adjustments 210 in near-real-time may enable a RAN to respond effectively to relatively sudden changes in the RAN, such as an increase in UE traffic.

Modifications, additions, or omissions may be made to the process 200 without departing from the scope of the disclosure. For example, the designations of different elements in the manner described is meant to help explain concepts described herein and is not limiting. For instance, in some embodiments, the steps of the process 200 are delineated in the specific manner described to help with explaining concepts described herein, but such delineation is not meant to be limiting. Further, the process 200 may include any number of other elements or may be implemented within other systems or contexts than those described.

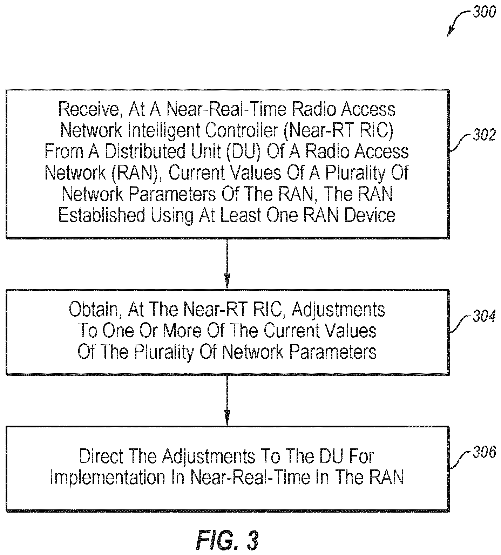

FIG. 3 is a flowchart of an example method 300 of adjusting a radio access network (RAN) using a near-real-time RAN intelligent controller (near-RT RIC), in accordance with one or more embodiments of the present disclosure. The method 300 may be performed by any suitable system, apparatus, or device. For example, the method 300 may be implemented in the environment 100 of FIG. 1 and/or by one or more devices/systems described with respect to FIGS. 1 and 2. Alternately or additionally, one or more operations of the method 300 may be performed by a computing system, such as that described with respect to FIG. 4. Although illustrated with discrete blocks, the steps and operations associated with one or more blocks of the method 300 may be divided into additional blocks, combined into fewer blocks, or eliminated, depending on the particular implementation. In some embodiments, one or more non-transitory computer readable mediums may be configured to store instructions that when executed result in performing the method 300.

The method 300 may include block 302. At block 302, the near-RT RIC may receive from a distributed unit (DU) of a RAN the current values of network parameters of the RAN, the RAN having been established using at least one RAN device. The near-RT RIC 110 of FIG. 1 and the near-RT RIC 206 of FIG. 2A may be examples of the near-RT RIC. The DU 106 of FIG. 1 and the DU 202 of FIG. 2A may be examples of the DU. The current values of network parameters 204 of FIG. 2A may be an example of the current values of network parameters. The RAN device 102 may be an example of the RAN device. In some embodiments, the network parameters may include at least one or more of uplink power control, uplink scheduling, uplink resource allocation, uplink interference mitigation, uplink quality of experience, uplink performance spectral efficiency, energy consumption, and processing efficiency. In some embodiments, the near-RT RIC may be configured to operate on an application layer of the RAN. In some embodiments, the current values of network parameters may include one or more values from a non-real-time RAN intelligent controller (non-RT RIC). In some embodiments, after receiving the current values, the near-RT RIC may send the current values to a cloud-based computing system.

At block 304, the near-RT RIC may obtain adjustments to one or more of the current values of the network parameters. In some embodiments, the adjustments may improve overall performance of the RAN. In some embodiments, the cloud-based computing system may be configured to generate the adjustments using one or more of quantum annealing and simulated annealing.

At block 306, the adjustments may be directed to the DU for implementation in near-real-time in the RAN. In some embodiments, the near-RT RIC may direct the adjustments to the DU.

Modifications, additions, or omissions may be made to the method 300 without departing from the scope of the disclosure. For example, the designations of different elements in the manner described is meant to help explain concepts described herein and is not limiting. Further, the method 300 may include any number of other elements or may be implemented within other systems or contexts than those described.

FIG. 4 is an example computing system 400 according to one or more embodiments of the present disclosure. The computing system 400 may include a processor 402, a memory 404, a data storage 406, a communication unit 408 and/or one or more quantum computing devices 410, which all or one or more of may be communicatively coupled. For example, the RAN device 102, the RU 104, the DU 106, the CU 108, the near-RT RIC 110, the non-RT RIC 114, the computing system 118, and/or the UE 122 in environment 100 of FIG. 1 and/or the DU 202, the near-RT RIC 206, and/or the computing system 208 in process 200 of FIG. 2A may be implemented as or configured to utilize a computing system consistent with the computing system 400.

Generally, the processor 402 may include any suitable special-purpose or general-purpose computer, computing entity, or processing device including various computer hardware or software modules and may be configured to execute instructions stored on any applicable computer-readable storage media. For example, the processor 402 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data.

Although illustrated as a single processor in FIG. 4, it is understood that the processor 402 may include any number of processors distributed across any number of network or physical locations that are configured to perform individually or collectively any number of operations described in the present disclosure. In some embodiments, the processor 402 may interpret and/or execute program instructions and/or process data stored in the memory 404, the data storage 406, or the memory 404 and the data storage 406. In some embodiments, the processor 402 may fetch program instructions from the data storage 406 and load the program instructions into the memory 404.

After the program instructions are loaded into the memory 404, the processor 402 may execute the program instructions, such as instructions to cause the computing system 400 to perform some of the operations of the method 300 of FIG. 3. For example, the computing system 400 may execute the program instructions to receive at a near-RT RIC from a DU of a RAN current values of network parameters of the RAN of the method 300 of FIG. 3.

The memory 404 and the data storage 406 may include computer-readable storage media or one or more computer-readable storage mediums for having computer-executable instructions or data structures stored thereon. Such computer-readable storage media may be any available media that may be accessed by a general-purpose or special-purpose computer, such as the processor 402. In some embodiments, the computing system 400 may or may not include either of the memory 404 and the data storage 406.

By way of example, and not limitation, such computer-readable storage media may include non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to store desired program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 402 to perform a particular operation or group of operations.

The communication unit 408 may include any component, device, system, or combination thereof that is configured to transmit or receive information over a network. In some embodiments, the communication unit 408 may communicate with other devices at other locations, the same location, or even other components within the same system. For example, the communication unit 408 may include a modem, a network card (wireless or wired), an optical communication device, an infrared communication device, a wireless communication device (such as an antenna), and/or chipset (such as a Bluetooth device, an 802.6 device (e.g., Metropolitan Area Network (MAN)), a WiFi device, a WiMax device, cellular communication facilities, or others), and/or the like. The communication unit 408 may permit data to be exchanged with a network and/or any other devices or systems described in the present disclosure. For example, the communication unit 408 may allow the computing system 400 to communicate with other systems, such as computing devices and/or other networks.

In some embodiments, the computing system 400 may include one or more quantum computing devices 410 that may receive instructions from and send data to the processor 402. For example, the quantum computing devices 410 may include one or more noisy intermediate-scale quantum (NISQ) devices, quantum annealers, analog quantum computers, universal quantum computers, and/or any other computing devices or combination of computing devices with at least one quantum bit (qubit). In these and other embodiments, the quantum computing devices 410 may include at least one quantum processor, which may include at least one qubit. The at least one qubit may be physically implemented using, for example, photons, trapped ions, electrons, one or more nuclei, superconductor circuits, and/or quantum dots. A qubit may be physically implemented in a variety of ways including the polarization state of a single photon, the spatial optical path of a single photon, two differing energy states of an atom or an ion, and/or the spin orientation of a particle or multiple particles, such as a nucleus. In some embodiments, the quantum computing devices 410 may include one or more computing devices with at least two qubits and at least one coupler capable of coupling the qubits. Storing the at least one qubit may include maintaining the at least one qubit in a suitable environment to allow quantum computation, for example by supercooling the at least one qubit. The at least one qubit may be operated upon by one or more quantum circuits, formed by a suitable arrangement of quantum logic gates.

In some embodiments, the quantum computing devices 410 may include one or more computing devices configured to perform quantum annealing and/or simulated annealing. For example, the quantum computing devices 410 may include another other computing devices configured to approximate solutions to and/or solve combinatorial optimization problems formulated as quadratic unconstrained binary optimization (QUBO) problems.

One skilled in the art, after reviewing this disclosure, may recognize that modifications, additions, or omissions may be made to the computing system 400 without departing from the scope of the present disclosure. For example, the computing system 400 may include more or fewer components than those explicitly illustrated and described.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, it may be recognized that changes may be made in form and detail without departing from the scope of the present disclosure. Thus, the present disclosure is limited only by the claims.

In some embodiments, the different components, modules, engines, and services described herein may be implemented as objects or processes that execute on a computing system (e.g., as separate threads). While some of the systems and methods described herein are generally described as being implemented in software (stored on and/or executed by general purpose hardware), specific hardware implementations or a combination of software and specific hardware implementations are also possible and contemplated.

In accordance with common practice, the various features illustrated in the drawings may not be drawn to scale. The illustrations presented in the present disclosure are not meant to be actual views of any particular apparatus (e.g., device, system, etc.) or method, but are merely idealized representations that are employed to describe various embodiments of the disclosure. Accordingly, the dimensions of the various features may be arbitrarily expanded or reduced for clarity. In addition, some of the drawings may be simplified for clarity. Thus, the drawings may not depict all of the components of a given apparatus (e.g., device) or all operations of a particular method.

Terms used herein and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, it is understood that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc. For example, the use of the term "and/or" is intended to be construed in this manner.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

Additionally, the use of the terms "first," "second," "third," etc., are not necessarily used herein to connote a specific order or number of elements. Generally, the terms "first," "second," "third," etc., are used to distinguish between different elements as generic identifiers. Absence a showing that the terms "first," "second," "third," etc., connote a specific order, these terms should not be understood to connote a specific order. Furthermore, absence a showing that the terms first," "second," "third," etc., connote a specific number of elements, these terms should not be understood to connote a specific number of elements. For example, a first widget may be described as having a first side and a second widget may be described as having a second side. The use of the term "second side" with respect to the second widget may be to distinguish such side of the second widget from the "first side" of the first widget and not to connote that the second widget has two sides.

All examples and conditional language recited herein are intended for pedagogical objects to aid the reader in understanding the invention and the concepts contributed by the inventor to furthering the art and are to be construed as being without limitation to such specifically recited examples and conditions. Although embodiments of the present disclosure have been described in detail, it should be understood that the various changes, substitutions, and alterations could be made hereto without departing from the spirit and scope of the present disclosure.

The following numbered statements are useful for understanding the present invention.

S 1. A method comprising: receiving, at a near-real-time radio access network intelligent controller from a distributed unit of a radio access network, current values of a plurality of network parameters of the radio access network, the radio access network established using at least one radio access network device; obtaining, at the near-real-time radio access network intelligent controller, adjustments to one or more of the current values of the plurality of network parameters; and directing the adjustments to the distributed unit for implementation in near-real-time in the radio access network.

S2. The method of statement S 1, wherein the adjustments to the one or more of the current values of the plurality of network parameters are based on a measurement of wireless network performance comprising one or more of: data, time, frequency, area, energy, computing performance capability, and cost.

S3. The method of statement S2, wherein the measurement of wireless network performance is expressed in units of bit/s/Hz/m$^2$/J/FLOPS/$, wherein: bit is a measurement of units of the data transmitted by the radio access network in binary digits, s is a measurement of the time the radio access network takes to transmit the data in seconds, Hz is a measurement of frequency used by the radio access network to transmit the data in hertz, m$^2$ is a measurement of area served by the radio access network in meters squared, J is a measurement of energy consumed by the radio access network to transmit the data in joules, FLOPS is a measurement of computing performance capability of the radio access network to perform baseband processing in floating-point operations per second, and $ is a measurement of cost of one or more of using the radio access network and providing the radio access network in a currency.

S4. The method of statement S 1, wherein the plurality of network parameters includes at least one or more of uplink power control, uplink scheduling, uplink resource allocation, uplink interference mitigation, uplink quality of experience, uplink performance spectral efficiency, energy consumption, and processing efficiency.

S5. The method of statement S 1, further comprising: after receiving the current values, sending the current values of the plurality of network parameters from the near-real-time radio access network intelligent controller to a cloud-based computing system.

S6. The method of statement S5, wherein the cloud-based computing system is configured to generate the adjustments using one or more of: quantum annealing and simulated annealing.

S7. The method of statement S 1, wherein the current values of the plurality of network parameters include one or more values obtained from a non-real-time radio access network intelligent controller.

S8. A system comprising: a near-real-time radio access network intelligent controller configured to: receive from a distributed unit of a radio access network, current values of a plurality of network parameters of the radio access network, the radio access network established by at least one radio access network device; obtain adjustments to one or more of the current values of the plurality of network parameters; and direct the adjustments to the distributed unit for implementation in near-real-time in the radio access network.

S9. The system of statement S8, wherein the plurality of network parameters includes at least one or more of uplink power control, uplink scheduling, uplink resource allocation, uplink interference mitigation, uplink quality of experience, uplink performance spectral efficiency, energy consumption, and processing efficiency.

S10. The system of statement S8, wherein the near-real-time radio access network intelligent controller is configured to operate on an application layer of the radio access network.

S11. The system of statement S8, wherein the adjustments improve overall performance of the radio access network.

S12. The system of statement S8, wherein the near-real-time radio access network intelligent controller is further configured to send the current values of the plurality of network parameters to a cloud-based computing system.

S13. The system of statement S12, wherein the cloud-based computing system is configured to generate the adjustments using one or more of: quantum annealing and simulated annealing.

S14. The system of statement S8, wherein the current values of the plurality of network parameters include one or more values from a non-real-time radio access network intelligent controller.

S15. One or more non-transitory computer-readable media storing instructions that, when executed by one or more processors, cause a system to perform operations, the operations comprising: receiving, at a near-real-time radio access network intelligent controller from a distributed unit of a radio access network, current values of a plurality of network parameters of the radio access network, the radio access network established using at least one radio access network device from a distributed unit of the radio access network; obtaining, at the near-real-time radio access network intelligent controller, adjustments to one or more of the current values of the plurality of network parameters; and directing the adjustments to the distributed unit for implementation in near-real-time in the radio access network.

S16. The one or more non-transitory computer-readable media of statement S15, wherein the plurality of network parameters includes at least one or more of uplink power control, uplink scheduling, uplink resource allocation, uplink interference mitigation, uplink quality of experience, uplink performance spectral efficiency, energy consumption, and processing efficiency.

S17. The one or more non-transitory computer-readable media of statement S15, wherein the adjustments improve overall performance of the radio access network.

S18. The one or more non-transitory computer-readable media of statement S15, further comprising: after receiving the current values, sending the current values of the plurality of network parameters from the near-real-time radio access network intelligent controller to a cloud-based computing system.

S19. The one or more non-transitory computer-readable media of statement S18, wherein the cloud-based computing system is configured to generate the adjustments using one or more of: quantum annealing and simulated annealing.

S20. The one or more non-transitory computer-readable media of statement S15, wherein the current values of the plurality of network parameters include one or more values from a non-real-time radio access network intelligent controller.

**Claims**

1. A method comprising:

   receiving, at a near-real-time radio access network intelligent controller from a distributed unit of a radio access network, current values of a plurality of network parameters of the radio access network, the radio access network established using at least one radio access network device;
   obtaining, at the near-real-time radio access network intelligent controller, adjustments to one or more of the current values of the plurality of network parameters; and
   directing the adjustments to the distributed unit for implementation in near-real-time in the radio access network.

2. The method of claim 1, wherein the adjustments to the one or more of the current values of the plurality of network parameters are based on a measurement of wireless network performance comprising one or more of: data, time, frequency, area, energy, computing performance capability, and cost, and optionally wherein the measurement of wireless network performance is expressed in units of bit/s/Hz/m²/J/FLOPS/$, wherein:

   bit is a measurement of units of the data transmitted by the radio access network in binary digits,
   s is a measurement of the time the radio access network takes to transmit the data in seconds,
   Hz is a measurement of frequency used by the radio access network to transmit the data in hertz,
   $m^2$ is a measurement of area served by the radio access network in meters squared,
   J is a measurement of energy consumed by the radio access network to transmit the data in joules,
   FLOPS is a measurement of computing performance capability of the radio access network to perform baseband processing in floating-point operations per second, and
   $ is a measurement of cost of one or more of using the radio access network and providing the radio access network in a currency.

3. The method of any preceding claim, wherein the plurality of network parameters includes at least one or more of uplink power control, uplink scheduling, uplink resource allocation, uplink interference mitigation, uplink quality of experience, uplink performance spectral efficiency, energy consumption, and processing efficiency.

**4.** The method of any preceding claim, further comprising:

after receiving the current values, sending the current values of the plurality of network parameters from the near-real-time radio access network intelligent controller to a cloud-based computing system, and optionally wherein the cloud-based computing system is configured to generate the adjustments using one or more of: quantum annealing and simulated annealing.

**5.** The method of any preceding claim, wherein the current values of the plurality of network parameters include one or more values obtained from a non-real-time radio access network intelligent controller.

**6.** A system comprising:
a near-real-time radio access network intelligent controller configured to:

receive from a distributed unit of a radio access network, current values of a plurality of network parameters of the radio access network, the radio access network established by at least one radio access network device; obtain adjustments to one or more of the current values of the plurality of network parameters; and direct the adjustments to the distributed unit for implementation in near-real-time in the radio access network.

**7.** The system of claim 6, wherein the plurality of network parameters includes at least one or more of uplink power control, uplink scheduling, uplink resource allocation, uplink interference mitigation, uplink quality of experience, uplink performance spectral efficiency, energy consumption, and processing efficiency.

**8.** The system of claim 6 or claim 7, wherein the near-real-time radio access network intelligent controller is configured to operate on an application layer of the radio access network.

**9.** The system of any of claims 6 to 8, wherein the adjustments improve overall performance of the radio access network.

**10.** The system of any of claims 6 to 9, wherein the near-real-time radio access network intelligent controller is further configured to send the current values of the plurality of network parameters to a cloud-based computing system, and optionally wherein the cloud-based computing system is configured to generate the adjustments using one or more of: quantum annealing and simulated annealing.

**11.** The system of any of claims 6 to 10, wherein the current values of the plurality of network parameters include one or more values from a non-real-time radio access network intelligent controller.

**12.** One or more non-transitory computer-readable media storing instructions that, when executed by one or more processors, cause a system to perform operations, the operations comprising:

receiving, at a near-real-time radio access network intelligent controller from a distributed unit of a radio access network, current values of a plurality of network parameters of the radio access network, the radio access network established using at least one radio access network device from a distributed unit of the radio access network; obtaining, at the near-real-time radio access network intelligent controller, adjustments to one or more of the current values of the plurality of network parameters; and directing the adjustments to the distributed unit for implementation in near-real-time in the radio access network.

**13.** The one or more non-transitory computer-readable media of claim 12, wherein the plurality of network parameters includes at least one or more of uplink power control, uplink scheduling, uplink resource allocation, uplink interference mitigation, uplink quality of experience, uplink performance spectral efficiency, energy consumption, and processing efficiency.

**14.** The one or more non-transitory computer-readable media of claim 12 or claim 13, wherein the adjustments improve overall performance of the radio access network.

**15.** The one or more non-transitory computer-readable media of any of claims 12 to 14, further comprising:

after receiving the current values, sending the current values of the plurality of network parameters from the near-real-time radio access network intelligent controller to a cloud-based computing system, and optionally wherein the cloud-based computing system is configured to generate the adjustments using one or more of: quantum annealing and simulated annealing.

EP 4 525 506 A1

**FIG. 1**

**FIG. 2A**

FIG. 2B

*300*

| Receive, At A Near-Real-Time Radio Access Network Intelligent Controller (Near-RT RIC) From A Distributed Unit (DU) Of A Radio Access Network (RAN), Current Values Of A Plurality Of Network Parameters Of The RAN, The RAN Established Using At Least One RAN Device |
|---|

*302*

| Obtain, At The Near-RT RIC, Adjustments To One Or More Of The Current Values Of The Plurality Of Network Parameters |
|---|

*304*

| Direct The Adjustments To The DU For Implementation In Near-Real-Time In The RAN |
|---|

*306*

*FIG. 3*

Computing System
400

Processor
402

Memory
404

Data Storage
406

Communication Unit
408

Quantum Computing Devices
410

*FIG. 4*

Europäisches
Patentamt
European
Patent Office
Office européen
des brevets

# EUROPEAN SEARCH REPORT

**Application Number**

EP 24 19 6023

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/204148 A1 (CHOU JOEY [US] ET AL) 1 July 2021 (2021-07-01) | 1-3,6,7, 9,12-14 | INV. H04W24/02 |
| Y | * paragraphs [0068], [0074]; figures 4,5 * | 2,4,8, 10,15 | H04L41/0803 |
| Y | KR 2023 0029249 A (LG UPLUS CORP [KR]) 3 March 2023 (2023-03-03) * paragraphs [0014], [0052] - [0059]; figure 3 * | 2,4,10, 15 | |
| Y | US 2022/167182 A1 (RAMAMURTHI VISHWANATH [US] ET AL) 26 May 2022 (2022-05-26) * paragraph [0037] * | 2,4,10, 15 | |
| Y | US 2023/217312 A1 (ATAWIA RAMY [CA]) 6 July 2023 (2023-07-06) * paragraph [0071] * | 2,4,10, 15 | |
| Y | WO 2023/148088 A1 (NOKIA SOLUTIONS & NETWORKS OY [FI]) 10 August 2023 (2023-08-10) * Page 14, lines 4-11 * | 8 | |

**TECHNICAL FIELDS SEARCHED (IPC)**

H04W
H04L

The present search report has been drawn up for all claims

| Place of search | Date of completion of the search | Examiner |
|---|---|---|
| Munich | 29 January 2025 | Enríquez García, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 525 506 A1**

## ANNEX TO THE EUROPEAN SEARCH REPORT
## ON EUROPEAN PATENT APPLICATION NO.

EP 24 19 6023

29-01-2025

| Patent document cited in search report | Publication date | Patent family member(s) | Publication date |
|---|---|---|---|
| US 2021204148 A1 | 01-07-2021 | NONE | |
| KR 20230029249 A | 03-03-2023 | NONE | |
| US 2022167182 A1 | 26-05-2022 | US 2022167182 A1<br>US 2022264335 A1 | 26-05-2022<br>18-08-2022 |
| US 2023217312 A1 | 06-07-2023 | NONE | |
| WO 2023148088 A1 | 10-08-2023 | NONE | |

EPO FORM P0459

For more details about this annex : see Official Journal of the European Patent Office, No. 12/82